Europäisches Patentamt

European Patent Office

Office européen des brevets

(11) Veröffentlichungsnummer: **0 330 672 B1**

(12) **EUROPÄISCHE PATENTSCHRIFT**

(45) Veröffentlichungstag der Patentschrift :
03.07.91 Patentblatt 91/27

(51) Int. Cl.⁵ : **B24B 45/00**

(21) Anmeldenummer : **87907932.5**

(22) Anmeldetag : **05.12.87**

(86) Internationale Anmeldenummer :
**PCT/DE87/00577**

(87) Internationale Veröffentlichungsnummer :
**WO 88/05386 28.07.88 Gazette 88/17**

(54) **SPANNEINRICHTUNG ZUM AXIALEN FESTSPANNEN EINES WERKZEUGES, INSBESONDERE EINER SCHEIBE.**

(30) Priorität : 15.01.87 DE 3700968

(43) Veröffentlichungstag der Anmeldung :
06.09.89 Patentblatt 89/36

(45) Bekanntmachung des Hinweises auf die
Patenterteilung :
03.07.91 Patentblatt 91/27

(84) Benannte Vertragsstaaten :
AT CH DE FR GB IT LI NL

(56) Entgegenhaltungen :
FR-A- 932 794

(73) Patentinhaber : ROBERT BOSCH GmbH
Postfach 10 60 50
W-7000 Stuttgart 10 (DE)

(72) Erfinder : BARTH, Walter
Römerstrasse 2
W-7022 Leinfelden-Echterdingen (DE)
Erfinder : HÄUSSLEIN, Friedrich
Keltenstrasse 4
W-7022 Leinfelden-Echterdingen (DE)
Erfinder : HELM, Winfried
Gotenstrasse 10
W-7022 Leinfelden-Echterdingen (DE)
Erfinder : STÄBLER, Manfred
Christophstrasse 45
W-7022 Leinfelden-Echterdingen (DE)

## Beschreibung

### Stand der Technik

Die Erfindung geht aus von einer Spanneinrichtung zum axialen Festspannen eines Werkzeuges, insbesondere einer Scheibe, nach dem gattungsbildenden Oberbegriff des Hauptanspruchs. Derartige Spannvorrichtungen sind vor allem für tragbare Handwerkzeugmaschinen und hierbei insbesondere z.B. für Schleifmaschinen geeignet. Es ist eine Spanneinrichtung genannter Art bekannt (DE-PS 30 12 836), bei der das Spannglied aus einem im Querschnitt etwa hutförmigen Element besteht, das axial über eine Schraubenfeder an der Spannmutter abgestützt ist. Beim Aufschrauben und Festziehen der Spannmutter wird über die axial zusammengedrückte Feder das hutförmige Spannglied axial gegen das Werkzeug angedrückt und dadurch das Werkzeug gegen den spindelseitigen Flansch festgezogen, wobei die Stirnseite eines Zylinderhülsenansatzes der Spannmutter unmittelbar an einer zugewandten Axialseite des spindelseitigen Flansches zur Anlage kommt und beim weiteren Festziehen der Spannmutter der spindelseitige Flansch zusammen mit der Spannmutter festgezogen wird. Dadurch soll erreicht werden, bei einem Winkelschleifer die Schleifscheibe mit definiertem Anpreßdruck einzuspannen und diesen Anpreßdruck sicherzustellen. Die Spanneinrichtung soll auch ein rasches und einfaches Auswechseln der Schleifscheibe ermöglichen und zugleich eine Überlastung der Handwerkzeugmaschine, insbesondere des Winkelschleifers, vermeiden. Wird nämlich das an der Schleifscheibe angreifende Drehmoment zu groß, so bleibt die Schleifscheibe stehen, während der spindelseitige Flansch sowie die Spannmutter mit Spannglied dazu eine Relativbewegung ausführen. Mit dieser Spanneinrichtung wird dem Effekt entgegengewirkt, daß im Betrieb die Spannmutter von selbst weiter festgezogen wird, was sonst das Lösen der Spannmutter beim Wechsel der Schleifscheibe erheblich erschwert. Dennoch ist hierbei ein Lösen der Spannmutter nur unter Zuhilfenahme eines besonderen Hilfswerkzeuges möglich, wobei je nach Ausbildung der Maschine die Spindel mit einem zweiten Hilfswerkzeug, z.B. Schraubenschlüssel, entsprechend gegengehalten werden muß.

### Vorteile der Erfindung

Bei der erfindungsgemäßen Spanneinrichtung mit den kennzeichnenden Merkmalen des Hauptanspruchs ergeben sich folgende Vorteile. Es wird ein Werkzeugwechsel ohne jegliches Hilfswerkzeug ermöglicht, der sich im übrigen schnell und sicher durchführen läßt. Ein weiterer Vorteil liegt darin, daß auch bereits vorhandene Handwerkzeugmaschinen ohne jeglichen besonderen Umbau umgerüstet werden können. Hierzu reicht z.B. lediglich der Austausch der vorhandenen Spannmutter gegen das Kompletteil, bestehend aus den axial zusammengehaltenen Teilen Stellglied, Spannglied, Spannmutter und Getriebe dazwischen. Dank des Getriebes kann der besagte Kompletteil zum Spannen von Hand angezogen werden, wobei beim Einschalten der Handwerkzeugmaschine im Betrieb selbsttätig ein Nachspannen mit weiterem Festziehen geschieht. Das Getriebe ermöglicht eine Übersetzung mit bewirkter Drehmomenterhöhung beim Festziehen. Beim Lösen kann durch Drehen des Stellgliedes diese drehmomenterhöhende Wirkung des Getriebes schnell und einfach durch geringfügiges Abschrauben mit axialem Entspannen beseitigt werden, wobei der Reibschluß zwischen dem Flansch des Spanngliedes und dem Werkzeug aufgehoben wird. Sobald dieser Reibschluß nicht mehr besteht, kann der Kompletteil ohne Wirksamwerden des Getriebes wie eine Einheit, z.B. wie eine bisher benutzte Spindelmutter, abgeschraubt und auch gegensinnig aufgeschraubt werden. Das Getriebe ist einfach und benötigt wenig Platz, so daß sich praktisch keine größeren Abmessungen ergeben.

Durch die in den Unteransprüchen aufgeführten Merkmale sind vorteilhafte Weiterbildungen und Verbesserungen der im Hauptanspruch angegebenen Spanneinrichtung möglich. Durch die Merkmale in den Ansprüchen 20 bis 22 wird eine Verminderung der zwischen der Spannmutter und dem Spannglied axial wirkenden Reibung erreicht.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich und erfindungswesentlich offenbart zu gelten haben. Alle in dieser Beschreibung erwähnten sowie auch nur alle allein aus der Zeichnung entnehmbaren Merkmale sind weitere Bestandteile der Erfindung, auch wenn sie nicht besonders hervorgehoben und nicht in den Ansprüchen erwähnt sind.

### Zeichnung

Ausführungsbeispiele der Erfindung sind in den Zeichnungen dargestellt und in der nachfolgenden Beschreibung näher erläutert. Es zeigen :

EP 0 330 672 B1

Fig. 1        einen schematischen axialen Längsschnitt einer Spanneinrichtung als Teil eines Winkelschleifers mit eingespannter Schleifscheibe, gemäß einem ersten Ausführungsbeispiel,

Fig. 2        einen schematischen Schnitt entlang der Linie II-II in Fig. 1,

Fig. 3 und 4  jeweils einen schematischen axialen Längsschnitt von Teilen einer Spanneinrichtung gemäß
              einem zweiten bzw. dritten Ausführungsbeispiel,

Fig. 5        einen schematischen, teilweisen Längsschnitt mit Seitenansicht etwa entsprechend Fig. 1
              einer Spanneinrichtung gemäß einem vierten Ausführungsbeispiel.


Beschreibung der Ausführungsbeispiele

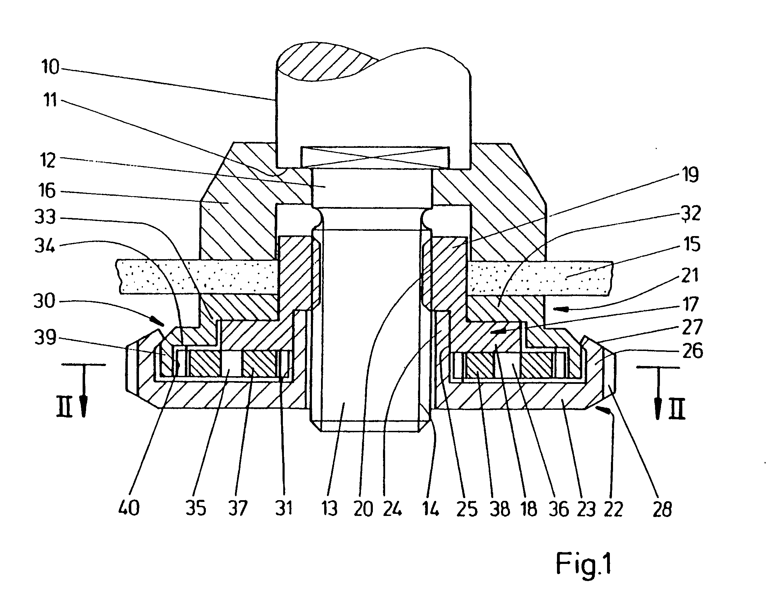

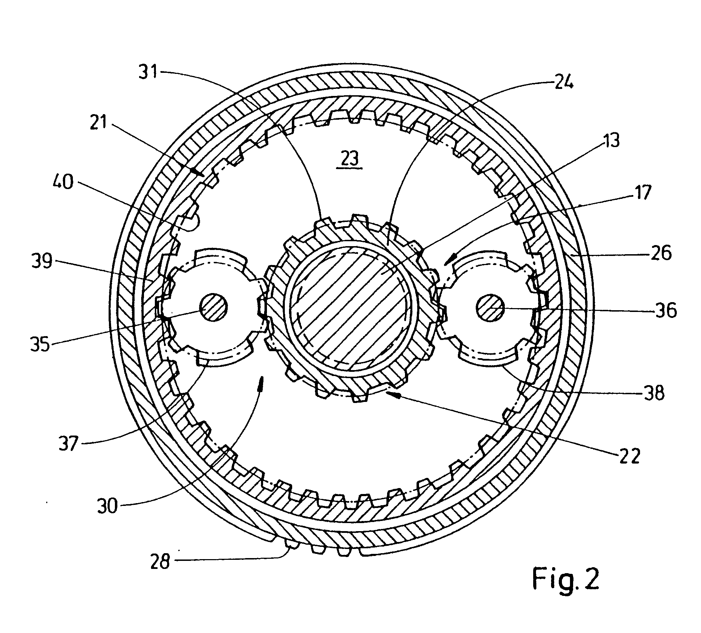

In Fig. 1 und 2 ist schematisch der untere Teil einer z.B. als Winkelschleifer gestalteten, tragbaren Handwerkzeugmaschine gezeigt, die eine motorisch und über ein Getriebe angetriebene Spindel 10 aufweist, die am Ende über eine Ringschulter 11 in einen zylindrischen Absatz 12 kleineren Durchmessers und sodann in einen endseitigen Gewindeabsatz 13 mit Außengewinde 14 übergeht. Die Spindel 10 dient zum Antrieb eines Werkzeuges 15, das z.B. aus der angedeuteten Schleifscheibe, einer anderen Werkzeugscheibe, einem Gummiteller, dem Sägeblatt einer Kreissäge od.dgl. besteht. Das Werkzeug 15 ist zwischen einem Flansch 16 und einer Spannmutter 17 eingespannt und festgespannt. Der Flansch 16 ist axial an der Ringschulter 11 abgestützt und radial auf dem zylindrischen Absatz 12 zentriert. Er ist formschlüssig mit der Spindel 10 gekuppelt.

Die Spannmutter 17 weist einen Ringflansch 18 und eine damit einstückige und davon abstrebende Zylinderhülse 19 auf und ist im Bereich der Zylinderhülse 19 mit einem Innengewinde 20 versehen, mit dem die Spannmutter 17 auf das Außengewinde 14 des Gewindeabsatzes 13 aufgeschraubt ist. Auf der äußeren Umfangsfläche der Zylinderhülse 19 ist beim Befestigen das Werkzeug 15 zentriert.

Im Axialbereich zwischen dem Werkzeug 15 einerseits und der Spannmutter 17 andererseits ist ein Spannglied 21 angeordnet. Dieses ist von der Spannmutter 17 her mit einer axial gerichteten Druckkraft beaufschlagbar und in der Lage, axial gegen das Werkzeug 15 zu drücken und dieses gegen die axiale Stirnseite des Flansches 16 anzupressen.

Die Spanneinrichtung beschriebener Art weist ferner ein handbetätigbares, relativ zum Gewindeabsatz 13 frei drehbar gehaltenes Stellglied 22 auf. Das Stellglied 22 ist als im Querschnitt etwa U-förmige Scheibe 23 ausgebildet, die im Zentrum einen damit einstückigen Zapfen 24 trägt, der mit Spiel dazwischen vom Gewindeabsatz 13 durchsetzt ist. Über einen in Abstand von der Scheibe 23 verlaufenden Axialabsatz des Zapfens 24 ist das Stellglied 22 auf der Spannmutter 17 zentriert und gelagert. Dies kann bei einem nicht gezeigten Ausführungsbeispiel z.B. auf einer äußeren zylindrischen Umfangsfläche eines über den Ringflansch 18 axial hinaus verlängerten Teiles der Zylinderhülse 19 erfolgen. Beim gezeigten Ausführungsbeispiel weist die Spannmutter 17 auf einem Axialbereich ihrer Zylinderhülse 19 und ihres Ringflansches 18 eine innere zylindrische Umfangsfläche 25 auf, die als Lagerfläche dient und auf der das Stellglied 22 mit einem Teil des Zapfens 24 zentriert und gelagert ist.

Die Spanneinrichtung enthält ferner ein Getriebe 30, über das das Stellglied 22 mit der Spannmutter 17 und diese mit dem Spannglied 21 getrieblich gekoppelt ist. Das Getriebe 30 ist im Inneren zwischen dem Spannglied 21 und dem Stellglied 22 enthalten. Dabei ist das Stellglied 22 mit dem Getriebe 30, der Spannmutter 17 und dem Spannglied 21 zu einem Teil zusammengefaßt und zusammengehalten, das als Kompletteil etwa nach Art einer Mutter auf den Gewindeabsatz 13 der Spindel 10 aufschraubbar ist und so als ein Teil gegen eine anders gestaltete Spannmutter jederzeit beliebig ausgetauscht werden kann. Dieses Kompletteil ist dadurch zu einem Teil zusammengehalten, daß die im Querschnitt etwa U-förmige Scheibe 23 am freien, dem Werkzeug 15 zugewandten Rand ihres Ringteiles 26 einen radial nach innen gerichteten Ring 27 trägt, der das Spannglied 21 in diesem Bereich zumindest mit einer radial nach innen gerichteten Komponente übergreift und somit axial am Stellglied 22 hält. Der Ringteil 26 ist außen mit einer Rändelung 28 versehen, so daß darüber das Stellglied 22 griffiger ist und besser von Hand gedreht werden kann.

Das Getriebe 30 ist hier als einstufiges Übersetzungsgetriebe in Form eines Zahnradgetriebes ausgebildet und hierbei insbesondere als Planetenradgetriebe. Teil des Getriebes 30 ist zunächst ein Zahnritzel 31, das einstückiger Teil des Zapfens 24 des Stellgliedes 22 ist und dabei koaxial zum Zapfen 24 angeordnet ist. Dabei befindet sich das Zahnritzel 31 auf dem Axialbereich, der sich axial zwischen der Scheibe 23 einerseits und dem der Lagerung des Stellgliedes 22 dienenden Axialabsatz, der auf der Umfangsfläche 25 zentriert und gelagert ist, andererseits erstreckt. Das Zahnritzel 31 schließt also axial direkt an die Scheibe 23 an. Es ist als Sonnenrad des Planetenradgetriebes ausgebildet. Über dieses Zahnritzel 31 ist bei Drehbetätigung des Stellgliedes 22 ein Antriebsmoment in das Getriebe 30 einleitbar.

Das Spannglied 21 ist im Querschnitt etwa umgekehrt topfförmig ausgebildet und weist einen Flansch 32 und einen axial daran anschließenden, dazu koaxialen Zylinder-, teil 33 auf, die miteinander einstückig sind. An den Zylinderteil 33 schließt sich eine damit einstückige Ringscheibe 34 an. Mit der dem Werkzeug 15 zuge-

3

EP 0 330 672 B1

wandten Axialfläche ist der Flansch 32 gegen das Werkzeug 15 anpreßbar. Der Flansch 32 bildet mit dem anschließenden Zylinderteil 33 und der Ringscheibe 34 eine Aufnahme für die Spannmutter 17. Der Flansch 32 ist im Zentrum von der Zylinderhülse 19 durchsetzt, die mit ihrer äußeren Umfangsfläche im Zentrum des Flansches 32 zentriert und gelagert ist. Der Ringflansch 18 lagert innerhalb des vom Zylinderteil 33 mit Ringscheibe 34 umgrenzten Ringraumes, wobei der Ringflansch 18 axial gegen den Flansch 32 drücken kann.

Die Spannmutter 17 ist hinsichtlich des als Planetenradgetriebes ausgebildeten Gebtriebes 30 als Planetenradträger ausgebildet. Ihr Ringflansch 18 weist auf der Axialseite, die dem Flansch 32 abgewandt ist, in radialem Abstand vom Zentrum zumindest einen oder, wie beim ersten Ausführungsbeispiel in Fig. 1 und 2 gezeigt ist, zwei Lagerbolzen 35, 36 mit jeweils einem darauf drehbar gelagerten Planetenrad 37 bzw. 38 auf. Die Planetenräder 37, 38 stehen hier einander diametral gegenüber und jeweils in Eingriff mit dem das Sonnenrad bildenden Zahnritzel 31.

Teil des Getriebes 30 ist ferner ein Ring 39, der mit einer Innenverzahnung 40 versehen ist und als Hohlrad des Planetenradgetriebes ausgebildet ist. Beide Planetenräder 37, 38 stehen mit der Innenverzahnung 40 in Eingriff. Der Ring 39 ist einstückiger Bestandteil des Spanngliedes 21. Er schließt sich an die Ringscheibe 34 an, wobei er dem Flansch 32 abgewandt ist.

Fig. 1 zeigt die Spanneinrichtung in der Spannstellung, in der über den Flansch 32 des Spanngliedes 21 das Werkzeug 15 axial am Flansch 16 festgespannt ist.

Soll das Werkzeug 15 entfernt und gewechselt werden, so wird hierzu das Stellglied 22 von Hand in Richtung "Lösen" gedreht. Der Flansch 32 steht dabei zunächst noch in Reibschluß mit dem Werkzeug 15 und ist dabei noch festgehalten, so daß aufgrund der Drehung des Zahnritzels 31 und dadurch veranlaßten Drehbetätigung der Planetenräder 37, 38 diese auf der Innenverzahnung 40 abrollen und somit die als Planetenradträger ausgebildete Spannmutter 17 bewegt und zumindest geringfügig axial gelockert wird. Die den Flansch 32 gegen das Werkzeug 15 anpressende Axialkraft wird dabei zumindest reduziert, so daß der Reibschluß zwischen dem Flansch 32 des Spanngliedes 21 einerseits und dem Werkzeug 15 andererseits aufgehoben ist. Sobald das Spannglied 21 bei aufgehobenem Reischluß frei beweglich ist, hat eine weitere Drehung des Stellgliedes 22 im Sinn "Lösen" zur Folge, daß nun die Planetenräder 37, 38 relativ zum Ring 39 mit der Innenverzahnung 40 stillstehen, also nicht mehr umlaufen, so daß auch die Spannmutter 17 stillsteht und mit dieser das Spannglied 21. Eine Drehung des Stellgliedes 22 wird also direkt auf die Spannmutter 17 und das Spannglied 21 übertragen, so daß folgende Teile praktisch wie eine einstückige Spindelmutter schnell vom Gewindeabsatz 31 abgeschraubt und gelöst werden : Stellglied 22, Planetenräder 37, 38, Spannmutter 17 und Spannglied 21. Dieser Kompletteil kann also nun vollends und leicht von Hand vom Gewindeabsatz 13 abgeschraubt werden. Ist das Werkzeug 15 ausgewechselt und soll ein neues aufgebracht werden, wird wie folgt vorgegangen. Zunächst wird der Flansch 16 auf die Spindel 10 aufgesteckt. Hiernach wird das neue Werkzeug 15 eingelegt und sodann der beschriebene Kompletteil wie sonst eine einstückige Spannmutter aufgesetzt und mit dem Innengewinde 20 der Zylinderhülse 19 auf den Gewindeabsatz 13 aufgeschraubt. Dabei durchsetzt die Zylinderhülse 19 das Werkzeug 15, das darauf zentriert wird. Beim Aufschrauben des beschriebenen Kompletteiles auf den Gewindeabsatz 13 bleibt zunächst das Getriebe 30 wirkungslos. Das Drehmoment wird vom Stellglied 22 über dessen Zahnritzel 31, die Planetenräder 37, 38 durch Reibung direkt auf die Spannmutter 17 und das sich auch mitdrehende Spannglied 21 übertragen. Kommt der Flansch 32 des Spanngliedes 21 an dem Werkzeug 15 zur Anlage, und wird durch entstehenden Reibschluß dazwischen das Spannglied 21 gebremst, so beginnt die Wirkung des Getriebes 30. Die Drehung des Stellgliedes 22 im Sinne "Spannen" wird über das Zahnritzel 31 und von dort über die Planetenräder 37, 38 auf die Spannmutter 17 übertragen, die relativ zum gebremsten Spannglied 21, auf dessen Innenverzahnung 40 die Planetenräder 37, 38 abrollen, umläuft, wobei die Zylinderhülse 19 weiter axial aufgeschraubt wird. Mit dem Ringflansch 18 drückt dabei die Spannmutter 17 axial fester gegen den Flansch 32. Das durch das Getriebe 30 erzielte Übersetzungsverhältnis bewirkt eine Drehmomenterhöhung. Das am Ring 39 mit der Innenverzahnung 40 entstehende Rückdrehmoment wird durch den damit einstückigen Flansch 32 über Reibschluß in das Werkzeug 15 eingeleitet.

Der Reibschluß zwischen dem Werkzeug 15 und dem Flansch 32 bewirkt im gleichen Maße wie bei einer sonst bekannten normalen Spindelmutter ein selbsttätiges Nachspannen, wenn das Werkzeug 15 im Betrieb am Flansch 16 durchdrehen sollte. Die beschriebene Spanneinrichtung ist einfach, kostengünstig und schnell, sicher und leicht zu handhaben. Sie ermöglicht einen schnellen und sicheren Wechsel des Werkzeuges 15, ohne daß man hierzu zusätzliche besondere Werkzeuge benötigt. Ein weiterer Vorteil liegt darin, daß auch vorhandene Handwerkzeugmaschinen, insbesondere Schleifmaschinen, nachträglich ohne sonst nötigen Umbau mit dieser Spanneinrichtung ausgerüstet werden können. Hierzu muß lediglich die sonst vorhandene normale Spindelmutter ersetzt werden durch das Kompletteil, bestehend aus Stellglied 22, Spannmutter 17, Spannglied 21 mit Getriebe 30 dazwischen. Ferner kann diese Spanneinrichtung an einer ganz normalen Spindel verwendet werden, ohne daß irgendwelche sonstigen Vorkehrungen in Anpassung daran vorzunehmen wären. Vorteilhaft ist außerdem, daß sich das Stellglied 22 nach wie vor so ausbilden läßt, z.B. durch äußere

4

EP 0 330 672 B1

Werkzeugangriffsflächen, daß das Stellglied 22 nach wie vor erforderlichenfalls auch einen Angriff eines besonderen Hilfswerkzeuges ermöglicht, so daß in besonders hartnäckigen Fällen, z.B. in angerostetem Zustand, auch ein Lösen in üblicher Weise mittels eines solchen Hilfswerkzeuges möglich ist.

Die beschriebene Spanneinrichtung ist zum Spannen aller möglichen Werkzeuge 15 und im Zusammenhang mit verschiedenartigen Handwerkzeugen geeignet. Eine besondere Eignung ergibt sich für Schleifmaschinen, z.B. Winkelschleifer, und dabei zum Festspannen scheibenförmiger Werkzeuge 15.

Bei einem anderen, nicht gezeigten Ausführungsbeispiel ist das beschriebene Kompletteil z.B. im Zusammenhang mit einer anderen motorisch betriebenen Handwerkzeugmaschine, z.B. einer Handkreissäge, verwendet.

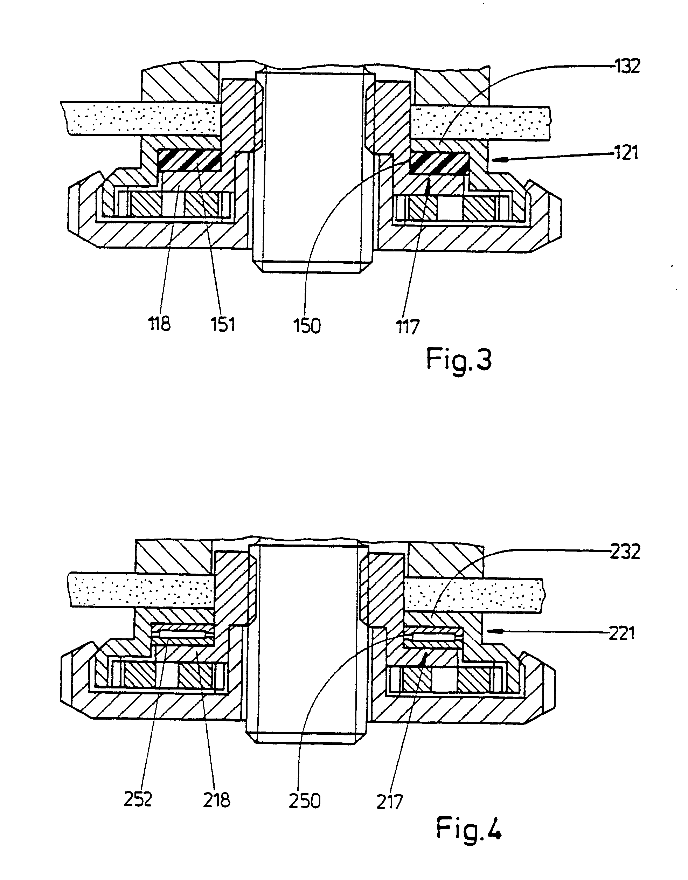

Bei dem in Fig. 3 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Das zweite Ausführungsbeispiel gemäß Fig. 3 unterscheidet sich vom ersten Ausführungsbeispiel dadurch, daß zwischen der Spannmutter 117 einerseits und dem Spannglied 121 andererseits ein reibungsminderndes Zwischenglied 150 angeordnet ist. Dieses besteht aus einer Scheibe 151 aus reibungsminderndem Werkstoff, z.B. aus Kunststoff. Die Scheibe 151 sitzt axial zwischen dem Ringflansch 118 einerseits und dem Flansch 132 andererseits. Diese dazwischengesetzte Scheibe vermindert die Reibung zwischen dem Flansch 132 und Ringflansch 118 der Spannmutter 7.

Beim dritten Ausführungsbeispiel in Fig. 4 ist ebenfalls zwischen dem Ringflansch 218 der Spannmutter 217 und dem Flansch 232 des Spanngliedes 221 ein reibungsminderndes Zwischenglied 250 plaziert, das hier jedoch aus einem Axialwälzlager 252 gebildet ist. Beim gezeigten Ausführungsbeispiel ist dieses als Nadellager ausgebildet. Bei einem andern nicht gezeigten Ausführungsbeispiel besteht das Axialwälzlager 252 aus einem Kugellager, Rollenlager oder anders gearteten Wälzlager. Dadurch ergibt sich zwischen dem Flansch 232 und dem Ringflansch 218 statt der Gleitreibung eine demgegenüber noch weiter verminderte Rollreibung.

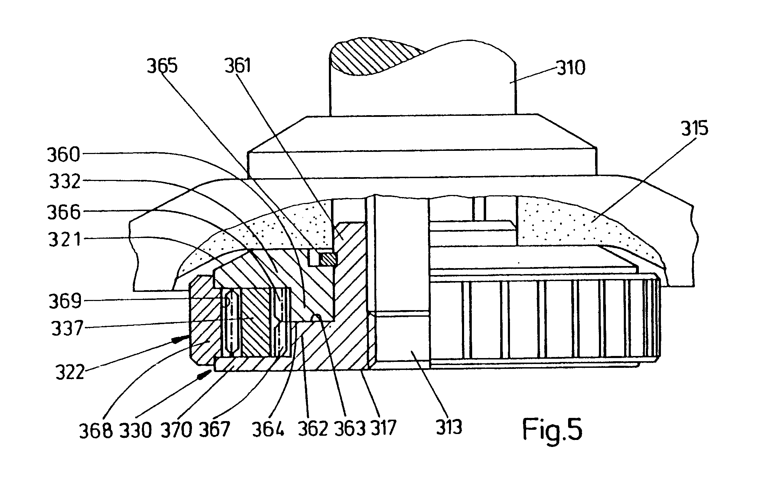

Bei dem in Fig. 5 gezeigten vierten Ausführungsbeispiel sind für die Teile, die dem ersten Ausführungsbeispiel entsprechen, aus den genannten Gründen um 300 größere Bezugszeichen verwendet.

Beim dritten Ausführungsbeispiel ist eine andere Ausführungsform des Getriebes 330, ebenfalls in der Ausbildung als Planetenradgetriebe, gezeigt. Das Spannglied 321 weist eine hohlzylindrische, zentrale Nabe 360 und einen damit einstückigen, radial abstrebenden Flansch 332 auf, der an das Werkzeug 315 axial anpreßbar ist. Die Spannmutter 317 hat eine mit Innengewinde versehene Zylinderhülse 361, mit der sie auf den Gewindeabsatz 313 der Spindel 310 aufgeschraubt ist. Am in Fig. 5 unteren Ende der Zylinderhülse 361 strebt ein damit einstückiger Ringabsatz 362 radial ab, dessen Außendurchmesser dem der Nabe 360 im wesentlichen entspricht. Mit der zur Nabe 360 hinweisenden. Stirnfläche 363 drückt der Ringabsatz 362 gegen die zugewandte Stirnfläche 364 der Nabe 360. Das Spannglied 321 ist mit der Nabe 360 auf der äußeren Umfangsfläche der Zylinderhülse 361 der Spannmutter 317 zentriert und gelagert, wobei beide Teile über einen Sicherungsring 365, z.B. Sprengring, so axial zusammengehalten sind ; daß ein Axialspiel verbleibt.

Die Nabe 360 des Spanngliedes 321 ist auf der äußeren Umfangsfläche mit einem Stirnzahnrad 366 versehen, das durch damit einstückige Stirnzähne gebildet ist. In gleicher Weise ist die äußere Umfangsfläche des Ringabsatzes 362 der Spannmutter 317 mit einem Stirnzahnrad 367 versehen, das hier ebenfalls durch damit einstückige Stirnzähne gebildet ist. Beide Stirnzahnräder 366 und 367 bilden Sonnenräder des Getriebes 330, die gemeinsam mit zumindest einem Planetenrad 337 gleichzeitig in Getriebeeingriff stehen. Es können auch mehrere einzelnen Planetenräder vorgesehen sein. Diese können lose plaziert sein oder sind für sich an einem nicht gezeigten Käfig, mit dem sie frei umlaufen können, in Umfangsrichtung auf Abstand gehalten.

Das Stellglied 322, an dem von Hand gedreht wird, ist hier als Ring 368 ausgebildet, der das Spannglied 321 im Bereich der äußeren Umfangsfläche des Flansches 332 und ferner die Spannmutter 317 außen umschließt und relativ dazu drehbar ist. Der Ring 368 ist mit einer Innenverzahnung 369 versehen. Er bildet das Hohlrad des Getriebes 330, das ebenfalls mit dem mindestens einen Planetenrad 337 in Getriebeeingriff steht. Das mindestens eine Planetenrad 337 oder mehrere Planetenräder sind in einem Ringraum angeordnet, der vom Spannglied 321, vom Ringabsatz 362 der Spannmutter 317 und vom Ring 368 umgrenzt und abgeschlossen ist. Zur in Fig. 5 unterseitigen axialen Abdeckung dieses Ringraumes erstreckt sich ein Deckelteil 370 ausgehend vom Ringabsatz 362 radial nach außen bis zum Ring 368. Der Deckelteil 370 ist einstückiger Bestandteil der Spannmutter 317.

Die Zähnezahl des Stirnzahnrades 367 der Spannmutter 317 weicht ab von der Zähnezahl des Stirnzahnrades 366 des Spanngliedes 321. Von Vorteil ist es, wenn die Zähnezahl des Stirnzahnrades 367 größer als diejenige des Stirnzahnrades 366 ist. Die Zähnezahldifferenz kann z.B. zwei Zähne betragen. Bei einem Beispiel hat das Stirnzahnrad 367 49 Zähne, während das andere Stirnzahnrad 366 nur 47 Zähne hat. Die Zähnezahl der Innenverzahnung 369 des Ringes 368 ist größer als diejenige der Stirnzahnräder 366 und 367. Bei einem Beispiel hat die Innenverzahnung 369 65 Zähne. Das mindestens eine Planetenrad 337 hat bei diesem

5

Beispiel 7 Zähne.

Diese Ausbildung des Getriebes 330 hat folgende Vorteile. Beim Drehen des Ringes 368 wälzen sich die Planetenräder 337 auf der Innenverzahnung 369 und am Stirnzahnrad 367 der Spannmutter 317 ab. Für einen vollständigen Umlauf der Planetenräder 337 wird mehr als eine Umdrehung des Ringes 368 benötigt. Während eines Umlaufs der Planetenräder 337 wird das Stirnzahnrad 367 der Spannmutter 317 um die Zähnezahldifferenz gegenüber dem Stirnzahnrad 366 des Spanngliedes 321 weitergedreht. Insgesamt ergibt sich dadurch ein hohes Übersetzungsverhältnis vom Ring 368 zur Spannmutter 317. Dieses Übersetzungsverhältnis beträgt beim genannten Beispiel mit den genannten Zähnezahlen 1 : 42. Das Getriebe 330 hat den Vorteil, daß es bei geringem Platzbedarf und einfacher Bauweise ein großes Übersetzungsverhältnis ermöglicht.

## Ansprüche

1. Spanneinrichtung zum axialen Festspannen eines Werkzeuges (15), insbesondere einer Scheibe, an einem Flansch (16) einer angetriebenen Spindel (10), mit einer mit Innengewinde (20) versehenen Spannmutter (17), die auf einen endseitigen Gewindeabsatz (13) der Spindel (10) aufschraubbar ist, und mit einem axial zwischen dem Werkzeugg (15) einerseits und der Spannmutter (17) andererseits angeordneten, von der Spannmutter (17) her mit einer axialen Spannkraft beaufschlagbaren Spannglied (21), das gegen das Werkzeug (15) drücken und dieses gegen den Flansch (16) anpressen kann, gekennzeichnet durch ein handbetätigbares, relativ zum Gewindeabsatz (13 ; 313) frei drehbar gehaltenes Stellglied (22 ; 322) und durch ein Getriebe (30 ; 330), über das das Stellglied (22 ; 322) mit der Spannmutter (17 ; 317) und die Spannmutter (17 ; 317) mit dem Spannglied (21 ; 321) getrieblich gekoppelt ist, wobei das als Planetenradgetriebe ausgebildete Getriebe (30 ; 330) zwischen dem Spannglied (21 ; 321) und dem Stellglied (22 ; 322) enthalten ist.

2. Spanneinrichtung nach Anspruch 1, **dadurch gekennzeichnet**, daß das Stellglied (22 ; 322) mit dem Getriebe (30 ; 330), der Spannmutter (17 ; 317) und dem Spannglied (21 ; 321) zu einem Teil zusammengefaßt und zusammengehalten ist, das als Kompletteil nach Art einer Mutter auf den Gewindeabsatz (13 ; 313) der Spindel (10 ; 310) aufschraubbar ist.

3. Spanneinrichtung nach einem der Ansprüche 1 und 2, **dadurch gekennzeichnet**, daß das Getriebe (30; 330) als ein- oder mehrstufiges Übersetzungsgetriebe ausgebildet ist.

4. Spanneinrichtung nach einem der Ansprüche 1 bis 3, **dadurch gekennzeichnet**, daß das Getriebe (30; 330) als Zahnradgetriebe ausgebildet ist.

5. Spanneinrichtung nach einem der Ansprüche 1 bis 4, **dadurch gekennzeichnet**, daß das Spannglied (21) im Querschnitt etwa umgekehrt topfförmig ausgebildet ist und einen an das Werkzeug (15) axial anpreßbaren Flansch (32) und einen an den Flansch (32) axial anschließenden, dazu koaxialen Zylinderteil (33) aufweist, wobei der Flansch (32) im Zentrum von einer mit ihrem Innengewinde (20) auf den Gewindeabsatz (13) aufschraubbaren Zylinderhülse (19) der Spannmutter (17) durchsetzt ist, daß die Spannmutter (17) einen an deren Zylinderhülse (19) axial anschließenden Ringflansch (18) aufweist, der axial unmittelbar oder mittelbar gegen den Flansch (32) drücken kann, und daß die Spannmutter (17) mit ihrem Ringflansch (18) im Spannglied (21) aufgenommen ist und dabei mit ihrem Rinflansch (18) im Zylinderteil (33) und/oder mit ihrer Zylinderhülse (19) im Zentrum des Flansches (32) zentriert und gelagert ist.

6. Spanneinrichtung nach einem der Ansprüche 1 bis 5, **dadurch gekennzeichnet**, daß das Stellglied (22) als im Querschnitt etwa U-förmige Scheibe (23), die im Zentrum einen vom Gewindeabsatz (13), vorzugsweise mit Spiel, durchsetzten Zapfen (24) trägt, ausgebildet ist und mit einem Axialabsatz des Zapfens (24) auf der Spannmutter (17) zentriert und gelagert ist.

7. Spanneinrichtung nach einem der Ansprüche 1 bis 6, **dadurch gekennzeichnet**, daß die Spannmutter (17) auf einem Axialbereich ihrer Zylinderhülse (19) und/oder ihres Ringflansches (18) eine innere oder äußere zylindrische Umfangsfläche (25) aufweist, die als Lagerfläche für das Stellglied (22) ausgebildet ist.

8. Spanneinrichtung nach Anspruch 7, **dadurch gekennzeichnet**, daß das Stellglied (22) mit dem Axialabsatz ihres Zapfens (24) auf der Lagerfläche (25) der Spannmutter (17) zentriert und gelagert ist.

9. Spanneinrichtung nach einem der Ansprüche 1 bis 8, **dadurch gekennzeichnet**, daß das Stellglied (22) ein Zahnritzel (31) aufweist, über das bei Drehbetätigung des Stellgliedes (22) ein Antriebsmoment in das Getriebe (30) einleitbar ist.

10. Spanneinrichtung nach Anspruch 9, **dadurch gekennzeichnet**, daß das Zahnritzel (31) am Zapfen (24) des Stellgliedes (22) und koaxial zu diesem angeordnet ist.

11. Spanneinrichtung nach Anspruch 10, **dadurch gekennzeichnet**, daß das Zahnritzel (31) auf dem Axialbereich des Zapfens (24) angeordnet ist, der sich axial zwischen dem der Lagerung des Stellgliedes (22) dienenden Axialabsatz und der Scheibe (23) erstreckt.

12. Spanneinrichtung nach einem der Ansprüche 9 bis 11, **dadurch gekennzeichnet**, daß das Zahnritzel (31) einstückiger Teil des Zapfens (24) ist.

13. Spanneinrichtung nach einem der Ansprüche 4 bis 12, **dadurch gekennzeichnet**, daß das Zahnritzel (31) als Sonnenrad des Planetenradgetriebes ausgebildet ist.

14. Spanneinrichtung nach einem der Ansprüche 4 bis 13, **dadurch gekennzeichnet**, daß die Spannmutter (17) als Planetenradträger ausgebildet ist.

15. Spanneinrichtung nach Anspruch 14, **dadurch gekennzeichnet**, daß die Spannmutter (17) auf der dem Spannglied (21) abgewandten Axialseite ihres Ringflansches (18) in radialem Abstand vom Zentrum zumindest einen Lagerbolzen (35, 36) mit einem darauf drehbar gelagerten Planetenrad (37, 38) aufweist, das mit dem Zahnritzel (31) als Sonnenrad in Eingriff steht.

16. Spanneinrichtung nach einem der Ansprüche 4 bis 15, **dadurch gekennzeichnet**, daß das Spannglied (21) einen dazu koaxialen, innenverzahnten Ring (39) aufweist, der als Hohlrad des Planetenradgetriebes ausgebildet ist, mit dessen Innenverzahnung (40) das mindestens eine Planetenrad (37, 38) in Eingriff steht.

17. Spanneinrichtung nach Anspruch 16, **dadurch gekennzeichnet**, daß der innenverzahnte Ring (39) einstückig unmittelbar oder über eine Ringscheibe (34) an das dem Flansch (32) abgewandte Ende des Zylinderteiles (33) des Spanngliedes (21) anschließt.

18. Spanneinrichtung nach einem der Ansprüche 1 bis 17, **gekennzeichnet durch** mindestens ein axial zwischen der Spannmutter (117 ; 217) und dem Spannglied (121 ; 221), insbesondere dem Ringflansch (118; 218) und dem Flansch (132, 232), angeordnetes reibungsminderndes Zwischenglied (150 ; 250).

19. Spanneinrichtung nach Anspruch 18, **dadurch gekennzeichnet**, daß das Zwischenglied (150) aus einer Scheibe (151) aus reibungsminderndem Werkstoff, z.B. aus Kunststoff, gebildet ist.

20. Spanneinrichtung nach Anspruch 18, **dadurch gekennzeichnet**, daß das Zwischenglied (250) aus einem Axialwälzlager (252), insbesondere Kugellager, Rollenlager, Nadellager od.dgl., gebildet ist.

21. Spanneinrichtung nach einem der Ansprüche 1 bis 4, **durch gekennzeichnet**, daß das Spannglied (321) einen an das Werkzeug (315) axial anpreßbaren Flansch (332) und eine davon axial abstrebende zentrale Nabe (360) aufweist, daß die Spannmutter (317) mit einer mit Innengewinde versehenen Zylinderhülse (361) auf den Gewindeabsatz (313) aufschraubbar ist und das Spannglied (321) mit seiner Nabe (360) auf der äußeren Umfangsfläche der Zylinderhülse (361) zentriert und gelagert ist und daß die Spannmutter (317) einen von der Zylinderhülse (361) radial abstrebenden Ringabsatz (362) aufweist, dessen dem Spannglied (321) zugewandte Stirnfläche (363) gegen die zugekehrte Stirnfläche (364) der Nabe (360) des Spanngliedes (321) drückt.

22. Spanneinrichtung nach Anspruch 21, **dadurch gekennzeichnet**, daß die Nabe (360) des Spanngliedes (321) und der Ringabsatz (362) der Spannmutter (317) gleiche Außendurchmesser aufweisen und jeweils ein Stirnzahnrad (366 bzw. 367) tragen, insbesondere damit einstückige Stirnzähne tragen, die beide Sonnenräder des Planetenradgetriebes (330) bilden.

23. Spanneinrichtung nach Anspruch 22, **dadurch gekennzeichnet**, daß das Stirnzahnrad (367)am Ringabsatz (362) der Spannmutter (317) eine von der Zähnezahl des Stirnzahnrades (366) an der Nabe (360) des Spanngliedes (321) abweichende Zähnezahl, insbesondere eine demgegenüber größere Zähnezahl, aufweist.

24. Spanneinrichtung nach Anspruch 23, **dadurch gekennzeichnet**, daß die Zähnezahldifferenz zwei Zähne beträgt.

25. Spanneinrichtung nach einem der Ansprüche 21 bis 23, **dadurch gekennzeichnet**, daß das Stellglied (322) als das Spannglied (321) und die Spannmutter (317) außen umschließender, relativ dazu drehbarer Ring (368) ausgebildet ist, der eine Innenverzahnung (369) aufweist und das Hohlrad des Planetenradgetriebes (330) bildet.

26. Spanneinrichtung nach Anspruch 25, **dadurch gekennzeichnet**, daß die Zähnezahl der Innenverzahnung (369) des Ringes (368) größer als diejenige der beiden Sonnenräder (366, 367) ist.

27. Spanneinrichtung nach einem der Ansprüche 25 bis 26, **dadurch gekennzeichnet**, daß die Spannmutter (317) am äußeren Ende einen damit einstückigen, vom Ringabsatz (362) radial nach außen bis zum Ring (368) reichenden Deckelteil (370) trägt, der den vom Ring (368), vom Spannglied (321) und vom Ringabsatz (362) der Spannmutter (317) umgrenzten Ringraum axial nach außen abschließt.

28. Spanneinrichtung nach Anspruch 27, **dadurch gekennzeichnet**, daß im Ringraum zumindest ein Planetenrad (337) angeordnet ist, das mit der Innenverzahnung (369) des Ringes (368) sowie mit den beiden Stirnzahnrädern (366, 367) der Nabe (360) und des Ringabsatzes (362) in Getriebeeingriff steht.

## Claims

1. Clamping device for axially tightening a tool (15), in particular a disc, on a flange (16) of a driven spindle (10), having a clamping nut (17) which is provided with an internal thread (20) and can be screwed onto an end threaded step (13) of the spindle (10), and a clamping member (21) which is arranged axially between the

7

tool (15) on the one hand and the clamping nut (17) on the other hand, can be acted upon from the clamping nut (17) by an axial clamping force, presses against the tool (15) and can press the latter against the flange (16), characterised by a manually operable regulating member (22 ; 322), held so as to be freely rotatable relative to the threaded step (13 ; 313), and by gearing (30 ; 330) via which the regulating member (22 ; 322) is coupled in a geared manner to the clamping nut (17 ; 317), and the clamping nut (17 ; 317) is coupled in a geared manner to the clamping member (21 ; 321), the gearing (30 ; 330), designed as epicyclic gearing, being contained between the clamping member (21 ; 321) and the regulating member (22 ; 322).

2. Clamping device according to Claim 1, characterised in that the regulating member (22 ; 322) is combined and held together with the gearing (30 ; 330), the clamping nut (17 ; 317) and the clamping member (21; 321) to form a part which can be screwed as a complete part like a nut onto the threaded step (13 ; 313) of the spindle (10 ; 310).

3. Clamping device according to either of Claims 1 or 2, characterised in that the gearing (30 ; 330) is designed as single-step or multi step transmission gearing.

4. Clamping device according to one of Claims 1 to 3, characterised in that the gearing (30 ; 330) is designed as toothed gearing.

5. Clamping device according to one of Claims 1 to 4, characterised in that the clamping member (21) is of roughly inverted pot-shaped design in cross-section and has a flange (32) which can be pressed axially against the tool (15) and a cylindrical part (33) axially adjoining the flange (32) and coaxial thereto, in which arrangement a cylindrical sleeve (19) of the clamping nut (17), which cylindrical sleeve (19) can be screwed with its internal thread (20) onto the threaded step (13), passes through the centre of the flange (32), in that the clamping nut (17) has an annular flange (18) which axially adjoins its cylindrical sleeve (19) and can press axially directly or indirectly against the flange (32), and in that the clamping nut (17) is accommodated with its annular flange (18) in the clamping member (21) and as a result is centred and mounted with its annular flange (18) in the cylindrical part (33) and/or with its cylindrical sleeve (19) in the centre of the flange (32).

6. Clamping device according to one of Claims 1 to 5, characterised in that the regulating member (22) is designed as a disc (23) which is roughly U-shaped in cross-section, has in the centre a spigot (24) through which the threaded step (13) passes, preferably with clearance, and is centred and mounted on the clamping nut (17) by an axial step of the spigot (24).

7. Clamping device according to one of Claims 1 to 6, characterised in that the clamping nut (17), on an axial area of its cylindrical sleeve (19) and/or its annular flange (18), has an inner or outer cylindrical peripheral surface (25) which is designed as a mounting surface for the regulating member (22).

8. Clamping device according to Claim 7, characterised in that the regulating member (22) is centred and mounted with the axial step of its spigot (24) on the mounting surface (25) of the clamping nut (17).

9. Clamping device according to one of Claims 1 to 8, characterised in that the regulating member (22) has a pinion (31) via which a driving torque can be passed into the gearing (30) during rotary actuation of the regulating member (22).

10. Clamping device according to Claim 9, characterised in that the pinion (31) is arranged on the spigot (24) of the regulating member (22) and in such a way as to be coaxial to the same.

11. Clamping device according to Claim 10, characterised in that the pinion (31) is arranged on the axial area of the spigot (24) which extends axially between the axial step serving to mount the regulating member (22) and the disc (23).

12. Clamping device according to one of Claims 9 to 11, characterised in that the pinion (31) is an integral part of the spigot (24).

13. Clamping device according to one of Claims 4 to 12, characterised in that the pinion (31) is designed as the sun gear of the epicyclic gearing.

14. Clamping device according to one of Claims 4 to 13, characterised in that the clamping nut (17) is designed as planet carrier.

15. Clamping device according to Claim 14, characterised in that the clamping nut (17), on the axial side of its annular flange (18) remote from the clamping member (21), has at a radial distance from the centre at least one bearing pin (35, 36) having a planet gear (37, 38) which is rotatably mounted thereon and meshes with the pinion (31) as sun gear.

16. Clamping device according to one of Claims 4 to 15, characterised in that the clamping member (21) has an internally toothed ring (39) coaxial thereto which is designed as the ring gear of the epicyclic gearing, with the internal tooth system (40) of which the at least one planet gear (37, 38) meshes.

17. Clamping device according to Claim 16, characterised in that the internally toothed ring (39), in a directly integral manner or via an annular disc (34), adjoins the end of the cylindrical part (33) of the clamping member (21) remote from the flange (32).

18. Clamping device according to one of Claims 1 to 17, characterised by at least one friction-reducing intermediate member (150 ; 250) arranged axially between the clamping nut (117 ; 217) and the clamping member (121 ; 221), in particular the annular flange (118 ; 218) and the flange (132, 232).

19. Clamping device according to Claim 18, characterised in that the intermediate member (150) is formed from a disc (151) made of a friction-reducing material, e.g. plastic.

20. Clamping device according to Claim 18, characterised in that the intermediate member (250) is formed from a rolling-contact thrust bearing (252), in particular a ball bearing, roller bearing, needle bearing or the like.

21. Clamping device according to one of Claims 1 to 4, characterised in that the clamping member (321) has a flange (332) which can be pressed axially against the tool (315) and a central hub (360) which juts out axially from the flange (332), in that the clamping nut (317), with a cylindrical sleeve (361) provided with an internal thread, can be screwed onto the threaded step (313), and the clamping member (321) is centred and mounted with its hub (360) on the outer peripheral surface of the cylindrical sleeve (361), and in that the clamping nut (317) has an annular step (362) which juts out radially from the cylindrical sleeve (361) and whose end face (363) facing the clamping member (321) presses against the facing end face (364) of the hub (360) of the clamping member (321).

22. Clamping device according to Claim 21, characterised in that the hub (360) of the clamping member (321) and the annular step (362) of the clamping nut (317) have the same outside diameter and each have a spur gear (366 or 367), in particular spur gear teeth integral therewith, which form both sun gears of the epicyclic gearing (330).

23. Clamping device according to Claim 22, characterised in that the number of teeth of the spur gear (367) on the annular step (362) of the clamping nut (317) differs from the number of teeth of the spur gear (366) on the hub (360) of the clamping member (321), in particular is greater compared with the number of teeth of the spur gear (366).

24. Clamping device according to Claim 23, characterised in that the difference between the number of teeth is two teeth.

25. Clamping device according to one of Claims 21 to 23, characterised in that the regulating member (322) is designed as a ring (368) which encloses on the outside the clamping member (321) and the clamping nut (317), is rotatable relative thereto, has an internal tooth system (369) and forms the ring gear of the epicyclic gearing (330).

26. Clamping device according to Claim 25, characterised in that the number of teeth of the internal tooth system (369) of the ring (368) is greater than that of the two sun gears (366, 367).

27. Clamping device according to one of Claims 25 to 26, characterised in that the clamping nut (317) has at the outer end a cap part (370) which is integral with the clamping nut (317), extends radially outwards from the annular step (362) up to the ring (368) and axially closes off to the outside the annular space defined by the ring (368), the clamping member (321) and the annular step (362) of the clamping nut (317).

28. Clamping device according to Claim 27, characterised in that at least one planet gear (337) is arranged in the annular space, which planet gear (337) meshes with the internal tooth system (369) of the ring (368) as well as with the two spur gears (366, 367) of the hub (360) and the annular step (362).

## Revendications

1. Dispositif de serrage pour le serrage axial d'un outil (15) notamment d'un disque contre une bride (16) d'une broche (10) entraînée, avec un écrou de serrage (17) muni d'un filetage intérieur (20), écrou qui se visse sur le prolongement fileté (13) à son extrémité de la broche (10) et avec un organe de serrage (21) qui est prévu axialement entre l'outil (15) d'une part et l'écrou de serrage (17) d'autre part, en partant de l'écrou de serrage (17) avec une force de serrage axiale, cet organe de serrage poussant contre l'outil (15) et pressant celui-ci contre la bride (16), dispositif caractérisé par un organe de réglage (22 ; 322) maintenu libre en rotation par rapport au prolongement fileté (13 ; 313) qui se commande à la main, et par une transmission (30 ; 330) par laquelle l'organe de réglage (22, 322) et l'écrou de serrage (17 ; 317) sont couplés en transmission ainsi que l'écrou de serrage (17 ; 317) et l'organe de serrage (21 ; 321), la transmission (30 ; 330) en forme de transmission à roues planétaires étant prévue entre l'organe de serrage (21 ; 321) et l'organe de réglage (22 ; 322).

2. Dispositif de serrage selon la revendication 1, caractérisé en ce que l'organe de réglage (22 ; 322) est réuni en une seule pièce avec la transmission (30 ; 330), l'écrou de serrage (17 ; 317) et l'organe de serrage (21 ; 321), l'ensemble étant maintenu réuni pour former une pièce complète correspondant à un écrou qui se visse sur le prolongement fileté (13 ; 313) de la broche (10 ; 310).

3. Dispositif de serrage selon l'une des revendications 1 et 2, caractérisé en ce que la transmission (30 ; 330) est constituée par une transmission de démultiplication à un ou plusieurs rapports.

4. Dispositif de serrage selon l'une des revendications 1 à 3, caractérisé en ce que la transmission (30 ;

330) est une transmission à pignon denté.

5. Dispositif de serrage selon l'une des revendications 1 à 4, caractérisé en ce que l'organe de serrage (21) a une section sensiblement en forme de pot renversé et comporte une bride (32) qui peut se presser axialement contre l'outil (15) ainsi qu'une partie cylindrique (33) adjacente axialement à la bride (32) et coaxiale à celle-ci, la bride (32) étant traversée en son centre par un manchon cylindrique (19) de l'écrou de serrage (17) qui peut se visser par son filetage intérieur (20) sur le prolongement fileté (13), l'écrou de serrage (17) ayant une bride annulaire (18) adjacente axialement à son manchon cylindrique (19), cette bride pouvant presser axialement, directement ou indirectement contre la bride (32) et en ce que l'écrou de serrage (17) est reçu par sa bride annulaire (18) dans l'organe de serrage (21) et est centré et positionné ainsi par sa bride annulaire (18) dans la partie cylindrique (33) et/ou par son manchon cylindrique (19) au centre de la bride (32).

6. Dispositif de serrage selon l'une des revendications 1 à 5, caractérisé en ce que l'organe de réglage (22) est un disque (23) à section en forme sensiblement de U, et qui porte en son centre un prolongement (24) traversé de préférence avec du jeu par le prolongement fileté (13) et est monté avec le décrochement axial du prolongement (24) de manière centrée et positionnée sur l'écrou de serrage (17).

7. Dispositif de serrage selon l'une des revendications 1 à 6, caractérisé en ce que l'écrou de serrage (17) comporte dans une zone axiale de son manchon cylindrique (19) et/ou de sa bride annulaire (18), une surface périphérique (25), cylindrique intérieure ou extérieure et qui constitue la surface de palier pour l'organe de réglage (22).

8. Dispositif de serrage selon la revendication 7, caractérisé en ce que l'organe de positionnement (22) est centré et est monté avec du jeu axial de son prolongement (24) sur la surface de palier (25) de l'écrou de serrage (17).

9. Dispositif de serrage selon l'une des revendications 1 à 8, caractérisé en ce que l'organe de réglage (22) comporte un pignon denté (31) qui permet d'induire dans la transmission (30) un couple moteur lorsqu'on fait tourner l'organe de réglage (22).

10. Dispositif de serrage selon la revendication 9, caractérisé en ce que le pignon denté (31) est prévu sur le prolongement (24) de l'organe de réglage (22), coaxialement à celui-ci.

11. Dispositif de serrage selon la revendication 10, caractérisé en ce que le pignon denté (31) est monté au niveau de la zone axiale du prolongement (24), zone qui s'étend axialement entre le décrochement axial servant au montage de l'organe de réglage (22) et le disque (23).

12. Dispositif de serrage selon l'une des revendications 9 à 11, caractérisé en ce que le pignon denté (31) fait corps avec le prolongement (24).

13. Dispositif de serrage selon l'une des revendications 4 à 12, caractérisé en ce que le pignon denté (31) est une roue solaire de la transmission à roues planétaires.

14. Dispositif de serrage selon l'une des revendications 4 à 13, caractérisé en ce que l'écrou de serrage (17) est en forme de support de roues planétaires.

15. Dispositif de serrage selon la revendication 14, caractérisé en ce que l'écrou de serrage (17) comporte sur son côté axial opposé à l'organe de serrage (21) de sa bride annulaire (18), à une distance radiale de son centre, au moins un goujon de palier (35, 36) recevant une roue planétaire (37, 38) montée à rotation et qui engrène avec le pignon denté (31) comme roue solaire.

16. Dispositif de serrage selon l'une des revendications 4 à 15, caractérisé en ce que l'organe de serrage (21) comporte une couronne (39) à denture intérieure montée coaxialement par rapport à l'organe de serrage et constituant la roue creuse de la transmission à roues planétaires et au moins une roue planétaire (37, 38) est en prise avec la denture intérieure (40).

17. Dispositif de serrage selon la revendication 16, caractérisé en ce que la couronne (39) à denture intérieure fait corps directement ou par l'intermédiaire d'un disque annulaire (34) à l'extrémité de la partie cylindrique (33) de l'organe de serrage (21), extrémité opposée à la bride (32).

18. Dispositif de serrage selon l'une des revendications 1 à 17, caractérisé par au moins une pièce intermédiaire (150 ; 250) de réduction de frottement, interposée axialement entre l'écrou de serrage (117 ; 217) et l'organe de serrage (121 ; 221) notamment la bride annulaire (118 ; 218) et la bride (132 ; 232).

19. Dispositif de serrage selon la revendication 18, caractérisé en ce que l'organe intermédiaire (150) est un disque (151) en un matériau réduisant le frottement comme par exemple de la matière synthétique.

20. Dispositif de serrage selon la revendication 18, caractérisé en ce que l'organe intermédiaire (250) est formé d'un palier à roulements axiaux (252) notamment d'un palier à billes, d'un palier à rouleaux, d'un palier à aiguilles ou analogues.

21. Dispositif de serrage selon l'une des revendications 1 à 4, caractérisé en ce que l'organe de serrage (321) comporte une bride (332) qui peut se presser axialement contre l'outil (315) et un moyeu central (360) la prolongeant axialement, l'écrou de serrage (317) se vissant sur le prolongement fileté (313) par l'intermédiaire d'un manchon cylindrique (361) muni d'un filetage intérieur et en ce que l'organe de serrage (321) et son moyeu (360) sont montés de manière centrée sur la surface périphérique extérieure du manchon cylindrique (361) et en ce que l'écrou de serrage (317) comporte un décrochement annulaire (362) radialement en saillie par rapport au manchon cylindrique (361), décrochement dont la surface frontale (363) tournée vers l'organe de serrage (321) pousse contre la surface frontale opposée (364) du moyeu (360) de l'organe de serrage (321).

22. Dispositif de serrage selon la revendication 21, caractérisé en ce que le moyeu (360) de l'organe de serrage (321) et le décrochement annulaire (362) de l'écrou de serrage (317) ont le même diamètre extérieur et portent chaque fois une roue à denture frontale (366, 367) avec notamment des dents frontales faisant corps et formant les deux roues solaires de la transmission à roues planétaires (330).

23. Dispositif de serrage selon la revendication 22, caractérisé en ce que la roue à denture frontale (367) comporte sur le décrochement annulaire (362) de l'écrou de serrage (317), un nombre de dents différent du nombre de dents de la roue à denture frontale (366) du moyeu (360) de l'organe de serrage (321), notamment un nombre de dents supérieur.

24. Dispositif de serrage selon la revendication 23, caractérisé en ce que la différence du nombre dents est égale à deux dents.

25. Dispositif de serrage selon l'une des revendications 21 à 23, caractérisé en ce que l'organe de réglage (322) est en forme de couronne (368) entourant extérieurement l'organe de serrage (321) et l'écrou de serrage (317) en pouvant tourner de manière relative, cette couronne ayant une denture intérieure (369) formant la roue creuse de la transmission à roues planétaires (330).

26. Dispositif de serrage selon la revendication 25, caractérisé en ce que le nombre de dents de la denture intérieure (369) de la couronne (368) est supérieur à celui des deux roues solaires (366, 367).

27. Dispositif de serrage selon l'une des revendications 25 et 26, caractérisé en ce que l'écrou de serrage (317) porte à son extrémité extérieure, une partie de couvercle (370) faisant corps, allant radialement du décrochement annulaire (362) jusqu'à la couronne (368), et fermant axialement vers l'extérieur le volume annulaire délimité par la couronne (368), l'organe de serrage (361) et le décrochement annulaire (362) de l'écrou de serrage (317).

28. Dispositif de serrage selon la revendication 27, caractérisé par au moins une roue planétaire (337) prévue dans le volume annulaire, cette roue étant en prise avec la denture intérieure (369) de la couronne (368) ainsi qu'avec les deux roues à denture frontale (366, 367) du moyeu (360) et du décrochement annulaire (362).

Fig.1

EP 0 330 672 B1

Fig. 2

EP 0 330 672 B1

Fig.3

Fig.4

EP 0 330 672 B1

Fig.5